# EUROPÄISCHE PATENTSCHRIFT

(11) **EP 2 085 752 B1**
(45) Veröffentlichungstag und Bekanntmachung des Hinweises auf die Patenterteilung: **05.11.2014**
(21) Anmeldenummer: 08171105.3
(22) Anmeldetag: 09.12.2008
(51) Int. Cl.: G01D 5/38

(54) **Optische Positionsmesseinrichtung**
Optical positioning device
Dispositif optique de mesure de la position

(30) Priorität: 02.02.2008 DE 102008007319
(43) Veröffentlichungstag der Anmeldung: 05.08.2009
(73) Patentinhaber: Dr. Johannes Heidenhain GmbH, 83301 Traunreut (DE)
(72) Erfinder: Hermann, Michael, 83342 Tacherting (DE); Sändig, Karsten, 83349 Palling (DE)

(56) Entgegenhaltungen:
- DE-A1- 19 716 058
- US-A- 5 497 226
- US-A- 5 539 446

## Beschreibung

Die vorliegende Erfindung betrifft eine optische Positionsmesseinrichtung, die zur Bestimmung der Relativposition zweier zueinander beweglicher Objekte geeignet ist.

In bekannten optischen Positionsmesseinrichtungen werden über die Wechselwirkung eines von einer Lichtquelle emittierten Strahlenbündels mit einer Maßverkörperung und ggf. weiteren Gittern im Abtaststrahlengang periodische Streifenmuster erzeugt. Im Fall der Relativbewegung bestimmter Komponenten der Positionsmesseinrichtung, üblicherweise der Maßverkörperung und einer Abtasteinheit, resultiert eine Intensitätsmodulation des Streifenmusters, die zur Erzeugung verschiebungsabhängiger Inkrementalsignale ausgewertet werden kann. Eine derartige Auswertung kann beispielsweise über sog. strukturierte Photodetektoren erfolgen, die aus einer periodischen Anordnung von Photodioden bestehen. Die Periodizität der Detektor-Anordnung wird je nach Anzahl der phasenverschobenen Inkrementalsignale auf die Periodizität des Streifenmusters abgestimmt. Im Fall höher auflösender optischer Positionsmesseinrichtungen ergeben sich immer feinere Streifenmuster, d.h. die Periodizität derselben verringert sich entsprechend; ebenso verringert sich dann die erforderliche Breite der Photodioden in einem zur Abtastung derartiger Streifenmuster genutzten strukturierten Photodetektor. Aufgrund fertigungsbedingter Einschränkungen kann die Breite der Photodioden in einer solchen Anordnung eine bestimmte Minimalbreite nicht unterschreiten. Ab einer Streifenmusterperiode von etwa 40µm stehen keine geeigneten strukturierten Photodetektoren mehr zur Verfügung.

Es sind daher Lösungen bekannt geworden, bei denen in der Abtastebene, in der das periodische Streifenmuster resultiert, ein Abtastgitter angeordnet wird, das aus mehreren unterschiedlichen Gitterabschnitten besteht. Jeder Gitterabschnitt besitzt ein bestimmte räumliche Ablenkwirkung auf die durch diesen Gitterabschnitt propagierenden Strahlenbündel. Hierbei unterscheiden sich die Ablenkwirkungen unterschiedlicher Gitterabschnitte. Den verschiedenen Gitterabschnitten sind dann in der jeweiligen Ablenk-Raumrichtung in einer Detektionsebene Detektorelemente zugeordnet, über welche die verschiebungsabhängigen Inkrementalsignale erfassbar sind. Im Zusammenhang mit derartigen Lösungen sei etwa auf die EP 724 713 B1 verwiesen. Nachteilig an der bekannten Variante aus der EP 724 713 B1 ist die erhöhte Empfindlichkeit gegenüber Verschmutzungen der Maßverkörperung, insbesondere gegenüber linienförmigen Verschmutzungen, die sich in Messrichtung erstrecken sowie gegenüber Inhomogenitäten der Maßverkörperung, z.B. Kratzer.

Aufgabe der vorliegenden Erfindung ist es, eine optische Positionsmesseinrichtung anzugeben, die eine zuverlässige Erfassung von feinen Streifenmustern in einer Abtastebene mit einem hohen Wirkungsgrad und einer möglichst großen Unempfindlichkeit gegenüber Verschmutzungen der Maßverkörperung ermöglicht.

Diese Aufgabe wird gelöst durch eine Positionsmesseinrichtung mit den Merkmalen des Anspruches 1.

Vorteilhafte Ausführungsformen der erfindungsgemäßen Positionsmesseinrichtung ergeben sich aus den Maßnahmen in den abhängigen Ansprüchen. Erfindungsgemäß ist nunmehr zum einen eine besondere Ausgestaltung des Abtastgitters im Abtaststrahlengang der Positionsmesseinrichtung vorgesehen. So besteht das Abtastgitter zur Erzeugung aller Inkrementalsignale aus mehreren, periodisch mit der Abtastgitter-Periodizität TP_{AG} = TP_{S} in Messrichtung angeordneten Blöcken. Jeder Block umfasst n ausschließlich in Messrichtung angeordnete Gitterabschnitte der Breite bₓ = TP_{AG}/n. Jeder Gitterabschnitt weist eine periodische Gitterstruktur auf, die eine Ablenkung der durch diesen Gitterabschnitt propagierenden Strahlenbündel in mehrere Raumrichtungen bewirkt. Die resultierenden Raumrichtungen der Gitterabschnitte in einem Block unterscheiden sich.

Zum anderen ist vorgesehen, in einer Detektionsebene Detektorelemente in den verschiedenen Raumrichtungen anzuordnen. Die Detektionsebene liegt in einem Bereich, in dem die vom Abtastgitter kommenden Strahlenbündel vollständig räumlich getrennt sind.

Als besonders vorteilhaft erweist sich hierbei, dass aufgrund der Anordnung der Gitterabschnitte ausschließlich in Messrichtung eine geringere Verschmutzungsanfälligkeit gegenüber dem bekannten System aus dem Stand der Technik resultiert. Ferner besitzen die erzeugten Inkrementalsignale einen höheren Modulationsgrad aufgrund der vorgesehen Breite der Gitterabschnitte. Außerdem ist anzuführen, dass aufgrund der Verwendung von jeweils in mehreren Raumrichtungen abgelenkten Strahlenbündeln eine hohe Effizienz bei der Signalerzeugung gewährleistet ist.

Es lassen sich aufgrund der erfindungsgemäßen Maßnahmen nunmehr auch sehr feine Streifenmuster in einer Abtastebene optischer Positionsmesseinrichtungen zuverlässig mit einem hohen Wirkungsgrad abtasten.

In einer möglichen Ausführungsform besteht die erfindungsgemäße optische Positionsmesseinrichtung zur Erzeugung von n > 1 phasenverschobenen, verschiebungsabhängigen Inkrementalsignalen bezüglich zweier in einer Messrichtung zueinander beweglichen Objekte aus einer Maßverkörperung und einer Abtasteinheit mit einem in einer Abtastebene angeordneten Abtastgitter sowie mehreren, dem Abtastgitter nachgeordneten Detektorelementen, wobei über die Wechselwirkung der von einer Lichtquelle emittierten Strahlenbündel mit der Maßverkörperung und optionalen weiteren Gittern im Abtaststrahlengang in der Abtastebene ein Streifenmuster mit der Streifenmuster-Periodizität TP_{S} resultiert. Das Abtastgitter besteht zur Erzeugung aller Inkrementalsignale aus mehreren, periodisch mit der Abtastgitter-Periodizität TP_{AG} = TP_{S} in Messrichtung angeordneten Blöcken, wobei jeder Block n ausschließlich in Messrichtung angeordnete Gitterabschnitte der Breite bₓ = TP_{AG}/n umfasst und jeder Gitterabschnitt eine periodische Gitterstruktur aufweist, die eine Ablenkung der durch diesen Gitterabschnitt propagierenden Strahlenbündel in mehrere Raumrichtungen bewirkt, wobei sich die resultierenden Raumrichtungen der Gitterabschnitte in einem Block unterscheiden. In einer Detektionsebene sind Detektorelemente in den verschiedenen Raumrichtungen angeordnet, wobei die Detektionsebene in einem Bereich liegt, in dem die vom Abtastgitter kommenden Strahlenbündel vollständig räumlich getrennt sind.

Vorzugsweise bestehen die Gitterstrukturen aus periodisch mit der Gitterabschnitt-Periodizität TP_{G} angeordneten Strukturelementen mit alternierend unterschiedlichen optischen Eigenschaften, die jeweils innerhalb eines Gitterabschnitts unter dem gleichen Verdrehwinkel zu einer Achse senkrecht zur Messrichtung angeordnet sind.

Hierbei können für n = 4 verschiedene Gitterabschnitte in einem Block zwei oder vier verschiedene Verdrehwinkel für die Strukturelemente der Gitterabschnitte gewählt werden.

So ist es möglich , dass
- im Fall von zwei vorgesehenen, verschiedenen Verdrehwinkeln diese gemäß α₁ = 0°, α₂ = 0°, α₃ = 90°, α₄ = 90°gewählt sind oder
- im Fall von vier vorgesehenen, verschiedenen Verdrehwinkeln diese gemäß α₁ = 0°, α₂ = 30°, α₃ = 90°, α₄ = -30° gewählt sind.

Alternativ können für n = 3 verschiedene Gitterabschnitte in einem Block zwei oder drei verschiedene Verdrehwinkel für die Strukturelemente der Gitterabschnitte gewählt werden.

So ist es dann möglich möglich, dass
- im Fall von zwei vorgesehenen, verschiedenen Verdrehwinkeln diese gemäß α₁ = 90°, α₂ = 90°, α₃ = 0° gewählt sind oder
- im Fall von drei vorgesehenen, verschiedenen Verdrehwinkeln diese gemäß α₁ = 90°, α₂ = 20°, α₃ = -20° gewählt sind.

Die Gitterstrukturen können als Phasengitter ausgebildet sein, bei denen unterschiedliche Strukturelemente jeweils eine unterschiedliche phasenschiebende Wirkung auf die einfallenden Strahlenbündel ausüben.

Alternativ können die Gitterstrukturen auch als Amplitudengitter ausgebildet sein, bei denen unterschiedliche Strukturelemente jeweils eine unterschiedliche Durchlässigkeit auf die darauf einfallenden Strahlenbündel besitzen.

Es ist möglich , dass n = 4 oder n = 3 gewählt wird.

Vorzugsweise sind die Detektorelemente rechteckförmig ausgebildet und besitzen in Messrichtung eine größere Länge als in der hierzu senkrechten Richtung.

Die verschiedenen Gitterabschnitte können die gleiche Gitterabschnitt-Periodizität aufweisen.

Hierbei können ist es möglich, dass die geometrischen Schwerpunkte der Detektorelemente in der Detektionsebene auf einem Kreis mit dem Radius R angeordnet sind.

Es ist jedoch auch möglich, dass verschiedenen Gitterabschnitte zwei unterschiedliche Gitterabschnitt-Periodizitäten aufweisen.

Hierbei können die geometrischen Schwerpunkte der Detektorelemente in der Detektionsebene auf zwei Kreisen mit unterschiedlichen Radien angeordnet werden.

In einer möglich Ausführungsform der optischen Positionsmesseinrichtung ist die Abtasteinheit dergestalt ausgebildet, dass die von einer Lichtquelle emittierten Strahlenbündel
- ein erstes Mal auf die Maßverkörperung auftreffen, wo eine Aufspaltung in zwei zur Abtasteinheit rückreflektierte Teilstrahlenbündel erfolgt, die zwei unterschiedlichen Beugungsordnungen entsprechen,
- die beiden rückreflektierten Teilstrahlenbündel in der Abtasteinheit über ein Retroreflektorelement eine Rückreflexion in Richtung Maßverkörperung erfahren, wobei die Teilstrahlenbündel je zweimal Gitter durchlaufen,
- die auf die Maßverkörperung ein zweites Mal auftreffenden Teilstrahlenbündel eine erneute Beugung und Rückreflexion in Richtung der Abtasteinheit erfahren,
- in der Abtasteinheit mindestens ein Paar rückreflektierter Teilstrahlenbündel unter symmetrischen Winkeln zur optischen Achse am gleichen Ort auf das Abtastgitter auftrifft.

Zwischen dem Abtastgitter und den nachgeordneten Detektorelementen kann eine Fokussieroptik angeordnet sein, über die eine Fokussierung der in die verschiedenen Raumrichtungen abgelenkten Teilstrahlenbündel auf die Detektorelemente erfolgt.

Weitere Vorteile sowie Einzelheiten der erfindungsgemäßen Positionsmesseinrichtung ergeben sich aus der nachfolgenden Beschreibung eines Ausführungsbeispiels anhand der beiliegenden Figuren.

Dabei zeigt
- Figur 1a: einen ersten Teil des Abtaststrahlengangs eines ersten Ausführungsbeispiels einer erfindungsgemäßen Positionsmesseinrichtung;
- Figur 1b: einen zweiten Teil des Abtaststrahlengangs des ersten Ausführungsbeispiels einer erfindungsgemäßen Positionsmesseinrichtung;
- Figur 1c: eine Teilansicht des Abtastgitters aus der Positionsmesseinrichtung gemäß Fig. 1a, 1b;
- Figur 1d: eine Teil-Ansicht der Detektionsebene in der Positionsmesseinrichtung gemäß Fig. 1a, 1b;
- Fig. 2a: eine Teilansicht einer zweiten Ausführungsform eines geeigneten Abtastgitters;
- Figur 2b: eine Ansicht der Detektionsebene im Fall der Verwendung eines Abtastgitters gemäß Fig. 2a;
- Fig. 3a: eine Teilansicht einer dritten Ausführungsform eines geeigneten Abtastgitters;
- Figur 3b: eine Ansicht der Detektionsebene im Fall der Verwendung eines Abtastgitters gemäß Fig. 3a;
- Fig. 4a: eine Teilansicht einer vierten Ausführungsform eines geeigneten Abtastgitters;
- Figur 4b: eine Ansicht der Detektionsebene im Fall der Verwendung eines Abtastgitters gemäß Fig. 4a.

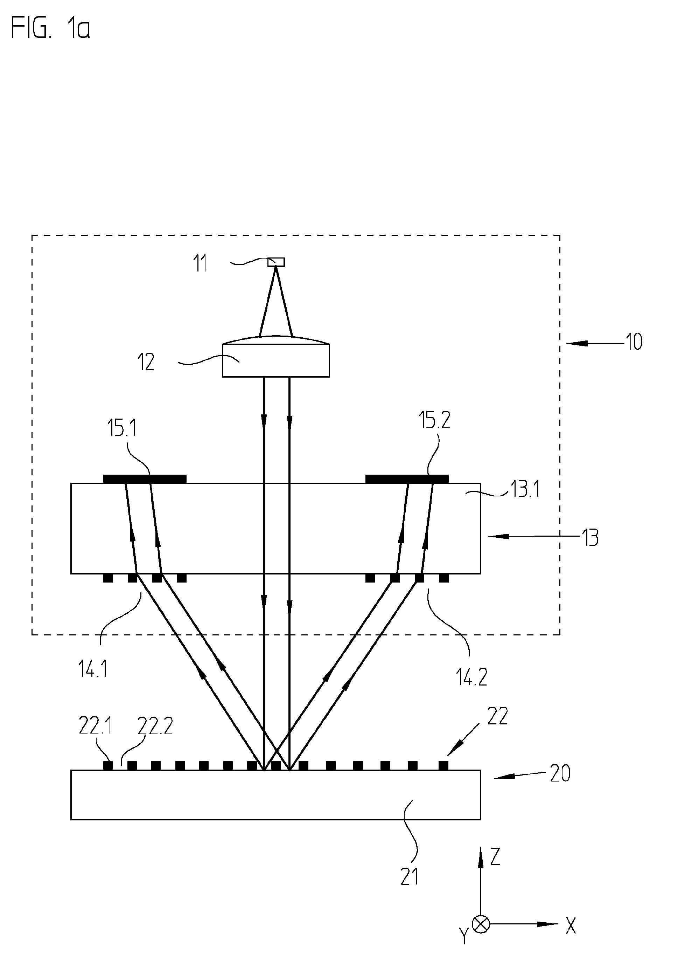

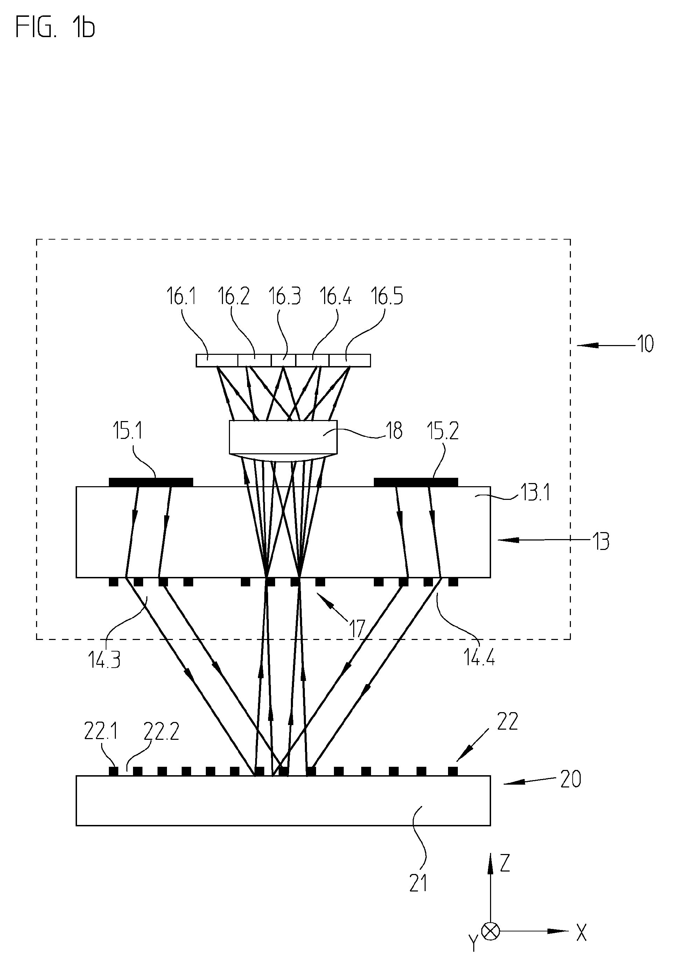

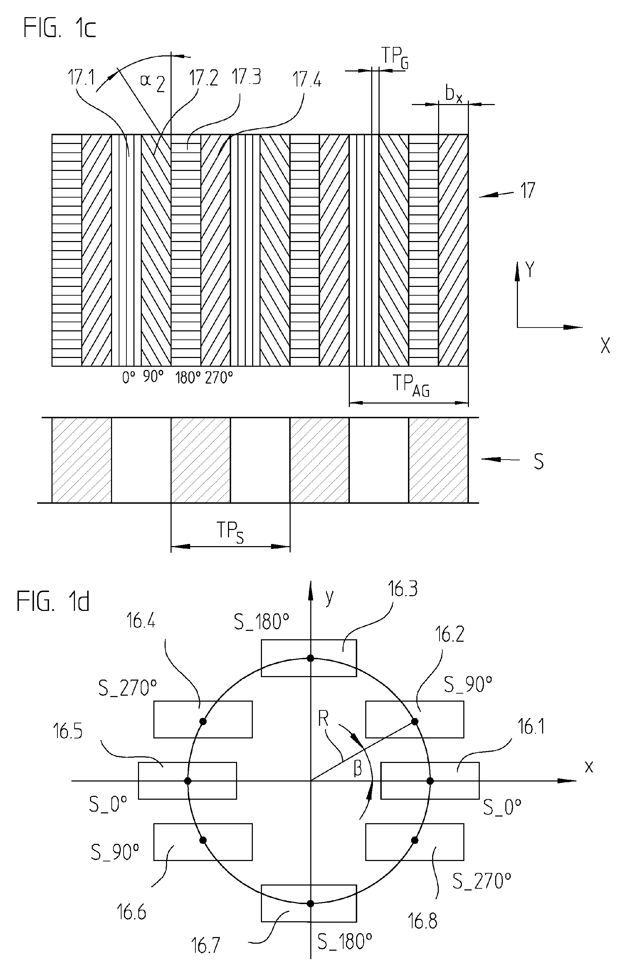

Anhand der Figuren 1a - 1d wird nachfolgend eine erste Ausführungsform der erfindungsgemäßen Positionsmesseinrichtung, insbesondere des dabei eingesetzten Abtastgitters erläutert. Die Figuren 1a und 1b zeigen hierbei jeweils in schematisierter Form Teil-Abtaststrahlengänge in einer seitlichen Ansicht in der x-z-Ebene. In Figur 1a ist der Abtaststrahlengang von der Lichtquelle 11 bis zum Auftreffen der Teilstrahlenbündel auf den Reflektorelementen 15.1, 15.2 dargestellt, Figur 1b zeigt den Abtaststrahlengang ab dem Auftreffen der Teilstrahlenbündel auf den Reflektorelementen 15.1, 15.2 bis zu den Detektorelementen 16.1 - 16.5. Die Figuren 1c und 1d zeigen Teil-Ansichten des Abtastgitters 17 und der Detektionsebene dieses Ausführungsbeispiels.

Die erfindungsgemäße Positionsmesseinrichtung umfasst in diesem Beispiel eine Maßverkörperung 20, ausgebildet als Reflexions-Maßverkörperung, sowie eine relativ hierzu in mindestens einer Messrichtung x bewegliche Abtasteinheit 10. Mit der Reflexions-Maßverkörperung 20 und der Abtasteinheit 10 sind in bekannter Art und Weise die Objekte gekoppelt, deren Relativposition mit Hilfe der Positionsmesseinrichtung zu bestimmen ist. Hierbei kann es sich etwa um Maschinenteile handeln, deren Relativposition präzise erfasst werden muss. Die mittels der erfindungsgemäßen Positionsmesseinrichtung erzeugten Inkrementalsignale bzw. Positionsdaten werden von einer - nicht dargestellten - Folgeelektronik oder Auswerteeinheit beispielsweise zur Steuerung der Maschine weiterverarbeitet.

Im vorliegenden Ausführungsbeispiel ist eine Positionsmesseinrichtung zur Erfassung von Linearbewegungen mit einer sich linear erstreckenden Maßverkörperung 20 dargestellt; selbstverständlich können auch rotatorische Positionsmesseinrichtungen auf Basis der erfindungsgemäßen Überlegungen realisiert werden.

Im Folgenden sei der Abtaststrahlengang der ersten Ausführungsform der erfindungsgemäßen Positionsmesseinrichtung anhand der Figuren 1a und 1b beschrieben.

Das von Lichtquelle 11, z.B. einer Laser-Lichtquelle, emittierte Strahlenbündel wird im dargestellten Beispiel zunächst über eine Kollimatoroptik 12 kollimiert, d.h. in ein paralleles Strahlenbündel umgewandelt. Anschließend durchtritt das kollimierte Strahlenbündel unabgelenkt, das Trägersubstrat 13.1 einer Abtastplatte 13. Das Trägersubstrat 13.1 ist als planparallele Glasplatte ausgebildet. Auf deren Ober- und Unterseite sind verschiedene optische Elemente angeordnet, auf deren konkrete Funktion im Abtaststrahlengang nachfolgend noch im Detail eingegangen wird.

Das kollimierte Strahlenbündel trifft nach dem Passieren der Abtastplatte 13 ein erstes Mal auf die Maßverkörperung 20, nämlich auf die sich dort in Messrichtung x erstreckende Messteilung 22. Die Messteilung 22 besteht im vorliegenden Fall einer Reflexions-Maßverkörperung aus einer in Messrichtung x periodischen Anordnung von Strukturelementen bzw. Teilbereichen 22.1, 22.2 mit unterschiedlichen optischen Reflexionseigenschaften. Die strichförmigen Teilbereiche 22.1, 22.2 erstrecken sich senkrecht zur Messrichtung x in der angegebenen Richtung y (nachfolgend auch Strichrichtung genannt) und sind auf einem Trägerkörper 21 der Reflexions-Maßverkörperung 20 angeordnet. Im dargestellten Beispiel ist die Messteilung 22 als Auflicht-Phasengitter ausgebildet, bei dem die Strukturelemente bzw. Teilbereiche 22.1, 22.2 eine unterschiedliche phasenschiebende Wirkung auf die darauf eintreffenden Strahlenbündel besitzen. Vorteilhaft ist ferner eine Auslegung der Messteilung 22 dahingehend, dass die Beugungseffizienz in den ersten Ordnungen maximiert wird. Die Teilungsperiode der Messteilung 22 sei nachfolgend als TP_{M} bezeichnet und ist definiert als die Länge zweier aufeinanderfolgender Teilbereiche 22.1, 22.2 in Messrichtung x. In einer möglichen Ausführungsform wird die Teilungsperiode TP_{M} im Bereich zwischen 1.1 * λ und 10 * λ gewählt, wobei λ die Wellenlänge der verwendeten Lichtquelle 11 ist. Im Fall einer als VCSEL oder LED ausgebildeten Lichtquelle mit λ = 850nm, könnte die Teilungsperiode TP_{M} demzufolge TP_{M} = 2.048µm betragen.

Nach dem ersten Auftreffen auf der Maßverkörperung 20 auf einem ersten Auftreffort resultiert eine Aufspaltung des einfallenden Strahlenbündels in zwei zur Abtasteinheit 10 zurückreflektierte Teilstrahlenbündel, die den +/- 1. Beugungsordnungen entsprechen. In der Abtasteinheit 10 durchlaufen die zurückreflektierten Teilstrahlenbündel zunächst die in Figur 1a dargestellten Gitter 14.1, 14.2 auf der Unterseite der Abtastplatte 13. Die Gitter 14.1, 14.2 sind im vorliegenden Beispiel als Transmissionsgitter ausgebildet. Von den Gittern 14.1, 14.2 werden die Teilstrahlenbündel in definierter Art und Weise abgelenkt und gelangen dann auf plane Reflektorelemente 15.1, 15.2. auf der Oberseite der Abtastplatte 13. Die beiden zuerst durchlaufenen Gitter 14.1, 14.2 besitzen die gleiche Teilungsperiode, die nachfolgend als TP_{G1} bezeichnet wird. Im vorliegenden, ersten Ausführungsbeispiel wird die Teilungsperiode TP_{G1} der Gitter 14.1, 14.2 unterschiedlich zur Teilungsperiode TP_{M} der Messteilung 22 gewählt. Aufgrund dieser Wahl der Teilungsperioden TP_{G1} propagieren die Teilstrahlenbündel nach dem Durchtreten der Gitter 14.1, 14.2 nicht senkrecht zur Abtastplatte 13.

Wie in Figur 1b dargestellt, erfolgt an den Reflektorelementen 15.1, 15.2 eine Rückreflexion der Teilstrahlenbündel in Richtung der Maßverkörperung 20. Vor dem zweiten Auftreffen auf die Maßverkörperung 20 an zweiten Auftrefforten, die sich vom ersten Auftreffort unterscheiden, durchlaufen die Teilstrahlenbündel die beiden weiteren Gitter 14.3, 14.4, die ebenfalls auf der Unterseite der Abtastplatte 13 angeordnet sind. Über diese Gitter 14.3, 14.4 erfolgt eine nochmalige Umlenkung der transmittierten Teilstrahlenbündel in Richtung des jeweiligen zweiten Auftreffortes auf der Maßverkörperung 20. Die beiden nunmehr durchlaufenen Gitter 14.3, 14.4 besitzen die gleiche Teilungsperiode, die nachfolgend als TP_{G2} bezeichnet wird.

Wie in der DE 10 2005 029 917.2 der Anmelderin beschrieben wird, weisen die Gitter 14.1 - 14.4 eine optische Doppelfunktion auf. Sie wirken einerseits in Messrichtung x wie ein regelmäßig periodisches Ablenkgitter mit den Teilungsperioden TP_{G1} bzw. TP_{G2}. In der Strichrichtung y in der Maßverkörperungsebene andererseits wirken sie wie Zylinderlinsen, die die einfallenden Strahlenbündel auf die Reflektorelemente 15.1, 15.2 fokussieren und anschließend wieder kollimieren. Im dargestellten Beispiel der Figuren 1a und 1b fokussieren die Gitter 14.1, 14.2, während die Gitter 14.3, 14.4 die austretenden Strahlenbündel wieder kollimieren. Die Kombination aus Reflektorelement und Linse stellt - wie in der DE 10 2005 029 917.2 der Anmelderin beschrieben - ein Retroreflektorelement für die Strichrichtung y der Maßverkörperung 20 dar. Aufgrund des Versatzes in y-Richtung zwischen den Strahlenbündeln und den optischen Achsen der Zylinderlinsen wird gleichzeitig ein Versatz in y-Richtung zwischen den ersten und zweiten Auftrefforten auf der Reflexions-Maßverkörperung 20 bewirkt. Damit die Abtastgitter gleichzeitig all diese optischen Funktionen übernehmen können, müssen sie als Gitter mit gekrümmten Gitterlinien ausgebildet werden, wie dies in der erwähnten DE 10 2005 029 917.2 beschrieben und in der nachfolgenden Fig. 1d schematisiert angedeutet ist; nachfolgend sei in Bezug auf derartige Gitter-Strukturen auch von diffraktiven Ablenk-/Linsenelementen die Rede.

Die Baueinheit, bestehend aus der Abtastplatte 13 mit dem Trägersubstrat 13.1, den Gittern 14.1, 14.2, 14.3, 14.4 sowie den planen Reflektorelementen 15.1, 15.2 fungiert im dargestellten ersten Ausführungsbeispiel demzufolge als Retroreflektorelement auf Seiten der Abtasteinheit 10. Über dieses erfolgt eine Rück-Umlenkung der von der Maßverkörperung 20 kommenden Teilstrahlenbündel in Richtung der Maßverkörperung 20, um diese ein zweites Mal zu beaufschlagen. Die Retroreflexion erfolgt hierbei in der angegebenen y-Richtung.

Auf der Maßverkörperung 20 resultiert im dargestellten ersten Ausführungsbeispiel der Figuren 1a - 1d an den jeweiligen zweiten Auftrefforten eine erneute Beugung und Rückreflexion der auftreffenden Teilstrahlenbündel in Richtung der Abtasteinheit 10. Die zur Signalerzeugung genutzten Teilstrahlenbündel treffen anschließend auf ein transmittives Abtastgitter 17, das im Abtaststrahlengang als Vereinigungsgitter fungiert und welches auf der Unterseite der Abtastplatte 13 angeordnet ist.

Im Fall der Relativverschiebung von Maßverkörperung 20 und Abtasteinheit 10 resultiert aufgrund der Wechselwirkung der Strahlenbündel mit der Maßverkörperung und den verschiedenen Gittern im Abtaststrahlengang in der Abtastebene ein verschiebungsabhängig moduliertes Streifenmuster, das eine Streifenmuster-Periodizität TP_{S} aufweist. Im vorliegenden Beispiel mit einer Teilungsperiode TP_{M} = 2.048µm der Maßverkörperung 20 und Gitter-Teilungsperioden TP_{AG1} = 2.194µm, TP_{AG2} = 1.861µm der Gitter 14.1 - 14.4 resultiert etwa eine Streifenmuster-Periodizität TP_{S} = 30µm.

Über das Abtastgitter 17 wird im Fall der erfindungsgemäßen Positionsmesseinrichtung die räumlich periodische Intensitätsverteilung des Streifenmusters in der Abtastebene in verschiedene Orte in der Detektionsebene umgewandelt, wozu im vorliegenden Beispiel noch eine zusätzliche Fokussieroptik 18 vorgesehen ist. Über die Umwandlung der räumlichen Intensitätsverteilung im Streifenmuster der Abtastebene in eine raumrichtungsabhängige Intensitätsverteilung werden Orten im Streifenmuster mit gleichen Eigenschaften gleiche räumliche Ausbreitungsrichtungen zugeordnet. Im Fall des verschiebungsabhängig modulierten, periodischen Streifenmusters in der Abtastebene bedeutet dies, dass Orte aus dem Streifenmuster mit gleichen Phasenlagen über das Abtastgitter 17 jeweils richtungsabhängig identisch abzulenken sind. In der Detektionsebene, die in einem Bereich liegt, in dem die vom Abtastgitter 17 kommenden Strahlenbündel vollständig räumlich getrennt sind, sind in den verschiedenen Raumrichtungen insgesamt acht Detektorelemente 16.1 - 16.5 angeordnet. Über die Detektorelemente 16.1 -16.5 werden die verschiebungsabhängigen, phasenverschobenen Inkrementalsignale detektiert werden, wobei in Figur 1b nicht alle Detektorelemente dargestellt sind.

Die in diesem Ausführungsbeispiel vorgesehene Fokussierungsoptik 18 ist hierbei nicht grundsätzlich erforderlich, ermöglicht aber die Fokussierung von Teilstrahlenbündeln gleicher Ausbreitungsrichtung ab dem Abtastgitter 17 auf besonders kleine Detektorelemente 16.1 - 16.5. Dies wiederum ermöglicht eine kompakte Ausbildung der Abtasteinheit 10. Aufgrund der kleineren Detektorelement-Flächen weisen die Detektorelemente ferner kleine Kapazitäten auf, so dass sich das Signalrauschen verringert. Zudem können aufgrund der Fokussierungsoptik größere Strahlquerschnitte zur Abtastung genutzt werden, ohne die Bauhöhe der Abtasteinheit oder die Kapazitäten der Detektorelemente zu vergrößern. Größere Abtastflächen wiederum ergeben grundsätzlich stabilere Inkrementalsignale.

Eine Teilansicht des im Beispiel der Figuren 1a und 1b genutzten Abtastgitters zeigt Figur 1c in Verbindung mit einem Teil des in der Abtastebene resultierenden Streifenmusters S, das die Streifenmuster-Periodizität TP_{S} aufweist. Wie oben erwähnt beträgt in einem möglichen Ausführungsbeispiel die Streifenmuster-Periodizität TP_{S} = 30µm.

Das zur Umwandlung des Streifenmusters S in eine raumrichtungsabhängige Intensitätsverteilung genutzte Abtastgitter 17 besteht aus einer Vielzahl von Blöcken mit je n = 4, ausschließlich in Messrichtung x angeordneten Gitterabschnitten 17.1 - 17.4. Die Gitterabschnitte 17.1 - 17.4 sind jeweils rechteckförmig ausgebildet und erstrecken sich in Längsrichtung in der angegebenen y-Richtung, d.h. senkrecht zur Messrichtung x. Die Abtastgitter-Periodizität TP_{AG}, in der die Blöcke angeordnet sind, entspricht der Streifenmuster-Periodizität TP_{S}. Innerhalb einer Streifenmuster-Periode TP_{S} sind im vorliegenden Beispiel in Messrichtung x n = 4 unterschiedlich ausgebildete Gitterabschnitte 17.1 - 17.4 angeordnet, die jeweils eine unterschiedliche räumliche Ablenkwirkung auf die durch den jeweiligen Gitterabschnitt 17.1 - 17.4 propagierenden Strahlenbündel bewirken; hierbei unterscheiden sich die resultierenden Raumrichtungen der Gitterabschnitte 17.1 - 17.4 innerhalb eines Blocks. Die Breite bₓ der verschiedenen Gitterabschnitte 17.1 - 17.4 in Messrichtung x beträgt demnach jeweils bₓ = TP_{S}/4 bzw. allgemein bₓ = TP_{S}/n, mit n > 1 bzw. n = 2, 3, 4....

Die vier unterschiedlich ausgebildeten Gitterabschnitte 17.1 - 17.4 bewirken aufgrund ihrer jeweiligen Ausgestaltung eine unterschiedliche räumliche Ablenkwirkung auf die darauf einfallenden Strahlenbündel. Hierzu weisen die Gitterabschnitte jeweils periodische Gitterstrukturen mit periodisch angeordneten Strukturelementen auf, die unterschiedliche optische Eigenschaften besitzen. Je nachdem, ob die Gitterstrukturen in den Gitterabschnitten als Amplitudengitter oder als Phasengitter ausgebildet sind, handelt es sich bei den unterschiedlichen optischen Eigenschaften etwa um unterschiedliche phasenschiebende Wirkungen oder aber um unterschiedliche Durchlässigkeiten. So kann es sich bei den Strukturelementen eines Amplitudengitters etwa um periodisch angeordnete, durchlässige und nicht-duchlässige Teilbereiche handeln etc..

Die Strukturelemente sind innerhalb der jeweiligen Gitterabschnitte periodisch angeordnet, wobei die Periodizität der Strukturelemente in den Gitterabschnitten nachfolgend als Gitterabschnitt-Periodizität TP_{G} bezeichnet sei. Im Beispiel der Figur 1c besitzen alle vier unterschiedlichen Gitterabschnitte 17.1 - 17.4 die gleiche Gitterabschnitt-Periodizität TP_{G} = 1.875µm.

Die vier unterschiedlichen Gitterabschnitte 17.1 - 17.4 innerhalb eines Blocks unterscheiden sich voneinander in der vorliegenden Ausführungsform in Bezug auf den Verdrehwinkel αᵢ (i = 1...4), unter dem die periodischen Strukturelemente zu einer Achse y angeordnet sind, die sich senkrecht zur Messrichtung x erstreckt. In Figur 1c ist etwa der Verdrehwinkel α₂ für den Gitterabschnitt 17.2 eingezeichnet, der hier gemäß α₂ = 30° gewählt wird. Wie aus Figur 1c ferner ersichtlich, sind in dieser Variante vier unterschiedliche Verdrehwinkel αᵢ (i = 1...4) für die vier unterschiedlichen Gitterabschnitte 17.1 - 17.4 vorgesehen, die gemäß α₁ = 0°, α₂ = 30°, α₃ = 90°, α₄ = -30° gewählt werden.

Aufgrund der Wahl dieser Verdrehwinkel αᵢ (i = 1...4) resultiert eine bestimmte räumliche Ablenkung der den jeweiligen Gitterabschnitten 17.1 - 17.4 zugeordneten Teile des Streifenmusters S, die sich aus der bekannten Gitter-Beugungsgleichung ableiten lässt. In jedem Gitterabschnitt 17.1 - 17.4 erfolgt erfindungsgemäß zumindest eine Ablenkung der darauf auftreffenden Strahlenbündel in zwei Raumrichtungen, nämlich mindestens eine Ablenkung in die +1. und in die -1. Beugungsordnung. Ggf. weitere Beugungsordnungen werden im Fall des vorliegenden Beispiels nicht zur Signalgewinnung ausgewertet.

So resultieren in der Detektionsebene entsprechend der Darstellung der Figur 1d die Ablenkwinkel +/- β in der Detektionsebene für jeden Gitterabschnitt 17.1 - 17.4 gemäß der nachfolgenden Zusammenstellung:

| Inkrementalsignal | S_0° | S_90° | S_180° | S_270° |
|---|---|---|---|---|
| Verdrehwinkel der Strukturelemente αᵢ [°]; i = 1...4 | 0 | 30 | 90 | -30 |
| Winkel der +1. Beugungsordnung β [°] | 0 | 30 | 90 | 150 |
| Winkel der -1. Beugungsordnung β [°] | 180 | 210 | 270 | 300 |

Aus den Gitterabschnitten 17.1 des Abtastgitters 17 wird demzufolge das Inkrementalsignal S_0° erzeugt, aus den Gitterabschnitten 17.2 das Inkrementalsignal S_90°, aus den Gitterabschnitten 17.3 das Inkrementalsignal S_180° und aus den aus den Gitterabschnitten 17.4 das Inkrementalsignal S_270°. Das vorliegende erste Ausführungsbeispiel stellt damit ein Vierphasensystem dar, dessen vier phasenverschobene Inkrementalsignale S_0°, S_90°, S_180°, S_270° in bekannter Art und Weise auswertbar sind.

In der Detektionsebene sind in den verschiedenen Raumrichtungen, in die aus den Gitterabschnitten 17.1 - 17.4 eine entsprechende Ablenkwirkung in die +/- 1 .Beugungsordnungen resultiert, acht Detektorelemente 16.1 - 16.8 angeordnet, wie dies in Figur 1d dargestellt ist.

Über die acht Detektorelemente 16.1 -16.8 lassen sich nunmehr vier verschiebungsabhängige, phasenverschobene Inkrementalsignale S_0°, S_90°, S_180° und S_270° erfassen. In Figur 1d ist zu jedem der acht Detektorelemente 16.1 -16.8 angegeben, welches der verschiedenen vier Inkrementalsignale S_0°, S_90°, S_180° und S_270° darüber detektiert wird.

Wie ferner aus Figur 1d ersichtlich ist, liegen die geometrischen Schwerpunkte der acht Detektorelemente 16.1 - 16.8 in diesem Ausführungsbeispiel auf einem Kreis mit dem Radius R; in einer möglichen Ausführungsform wird R = 2mm gewählt. Ebenfalls in Figur 1d ist erkennbar, dass die Detektorelemente 16.1 - 16.8 in diesem Fall rechteckförmig ausgebildet sind und hierbei in Messrichtung x eine größere Länge aufweisen als in der hierzu senkrechten Richtung y. Aufgrund dieser Ausgestaltung der Detektorelement-Geometrie lassen sich insbesondere große Toleranzen bzgl. Nickbewegungen der Abtasteinheit relativ zur Maßverkörperung gewährleisten.

Das erläuterte erste Ausführungsbeispiel eines geeigneten Abtastgitters stellt eine optimale Platzausnutzung in der Detektionsebene sicher und verringert den erforderlichen Bauraum in der Abtasteinheit. Im folgenden werden weitere Ausgestaltungen von Abtastgittern für die erfindungsgemäße Positionsmesseinrichtung erläutert, die in Bezug auf andere Anforderungen optimiert sind.

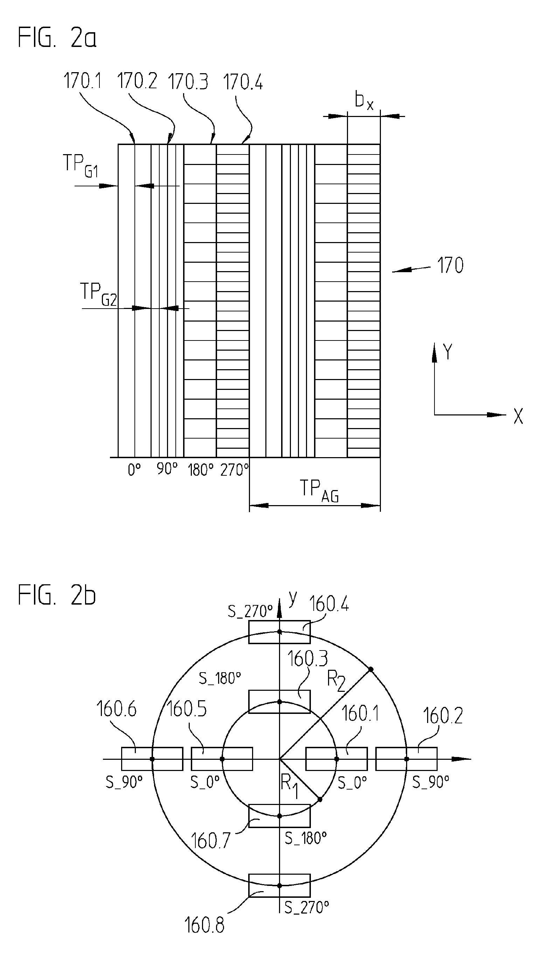

Anhand der Figuren 2a und 2b sei eine zweite Variante eines geeigneten Abtastgitters 170 für eine erfindungsgemäße Positionsmesseinrichtung sowie die daraus resultierende Anordnung der Detektorelemente in der Detektionsebene erläutert. Ein derartiges Abtastgitter könnte z.B. wieder in einer Positionsmesseinrichtung eingesetzt werden, wie sie anhand des Abtaststrahlengangs in den Figuren 1a und 1b erläutert wurde. Auch das nachfolgend beschriebene zweite Ausführungsbeispiel stellt wiederum ein Vierphasensystem dar, bei dem vier phasenverschobene, verschiebungsabhängig modulierte Inkrementalsignale S_0°, S_90°, S_180° und S_270° mit je 90° Phasenversatz resultieren. Die Größe n wird wie im vorherigen Beispiel demzufolge wieder gemäß n = 4 gewählt.

Vorgesehen sind im Abtastgitter 170 wie oben n = 4 Gitterabschnitte 170.1 - 170.4, die in Messrichtung x blockweise mit der Streifenmusterperiode TP_{S} angeordnet werden. Die Breite bₓ eines Gitterabschnitts 170.1 -170.2 wird innerhalb eines Blocks jeweils wiederum bₓ = TP_{S}/4 gewählt.

Im Unterschied zur vorherigen Variante umfasst das Abtastgitter 170 bzw. die verschiedenen Gitterabschnitte 170.1 - 170.4 nunmehr zwei verschiedene Gitterabschnitt-Periodizitäten TP_{G1}, TP_{G2}, wobei konkret TP_{G1}= 2 * TP_{G2} gewählt wird. So weisen die Gitterabschnitte 170.1 und 170.3 die größere Gitterabschnitt-Periodizität TP_{G1} auf, die Gitterabschnitte 170.2 und 170.4 die kleinere Gitterabschnitt-Periodizität TP_{G2}. Weiterhin unterschiedlich zur erläuterten ersten Ausführungsform sind wie aus Figur 2a ersichtlich die Verdrehwinkel αᵢ (i = 1...4) der vier unterschiedlichen Gitterabschnitte 170.1 - 170.4 gewählt; so sind in dieser Variante lediglich zwei verschiedene Verdrehwinkel αᵢ vorgesehen, nämlich die Verdrehwinkel α₁ = 0°, α₂ = 0°, α₃ = 90°, α₄ = 90°.

In der Detektionsebene ergeben sich hierbei entsprechend der Darstellung der Figur 2b die Ablenkwinkel +/- β für jeden Gitterabschnitt 170.1 - 170.4 gemäß der nachfolgenden Zusammenstellung:

| Inkrementalsignal | S_0° | S_90° | S_180° | S_270° |
|---|---|---|---|---|
| Verdrehwinkel der Strukturelemente αᵢ[°]; i=1...4 | 0 | 0 | 90 | 90 |
| Winkel der +1. Beugungsordnung β [°] | 0 | 0 | 90 | 90 |
| Winkel der -1. Beugungsordnung β [°] | 180 | 180 | 270 | 270 |
| Radius der Detektorelement-Schwerpunkte [R] | 1 | 2 | 1 | 2 |

Wie aus der Zusammenstellung sowie aus der Figur 2b ersichtlich, werden die - wiederum rechteckförmigen - Detektorelemente mit ihren geometrischen Schwerpunkten nunmehr auf zwei Kreisen mit den Radien R1 und R2, mit R2 = 2 * R1, angeordnet. Hierbei erfolgt die Anordnung der Schwerpunkte der Detektorelemente 160.1, 160.3, 160.5 und 160.7 auf dem Kreis mit dem Radius R1, die Schwerpunkte der Detektorelemente 160.2, 160.4, 160.6 und 160.8 werden in der gezeigten Art und Weise auf dem Kreis mit dem Radius R2 angeordnet.

Im Fall dieses Ausführungsbeispiels sind die Strukturelemente des Abtastgitters 170, wie aus Figur 2a ersichtlich, allesamt parallel oder senkrecht zu den anderen Gittern in der Positionsmesseinrichtung ausgerichtet, insbesondere zur Messteilung der Maßverkörperung, deren Strukturelemente sich ebenfalls in y-Richtung erstrecken und periodisch in Messrichtung x angeordnet sind. Eine derartige Ausführung des Abtastgitters 170 erweist sich in Positionsmesseinrichtungen als vorteilhaft, bei denen z.B. eine sog. VCSEL-Lichtquelle verwendet wird (vertical cavity surface emitting laser). Da in derartigen Lichtquellen mitunter sog. Polarisationssprünge auftreten, ordnet man diese vorzugsweise so an, dass die Hauptpolarisationsachsen der VCSEL-Lichtquelle die Winkel +/- 45° zu den Strukturelementen der Messteilung auf der Maßverkörperung einnehmen. Dadurch ist in Verbindung mit der zweiten Ausführungsform der Abtastplatte 170 sichergestellt, dass um 180° phasenverschobene Inkrementalsignale aus Gitterabschnitten 170. 1 - 170.4 der Abtastplatte 170 resultieren, die die gleiche Gitterabschnitt-Periodizität TP_{G1} oder TP_{G1} besitzen und somit gleiche Effizienzverhältnisse bzgl. dieser Inkrementalsignale vorliegen.

Ansonsten sei in Bezug auf diese Ausführungsform eines Abtastgitters sowie die Anordnung der Detektorelemente in der Detektionsebene auf die obigen Erläuterungen zur ersten Variante eines geeigneten Abtastgitters verwiesen.

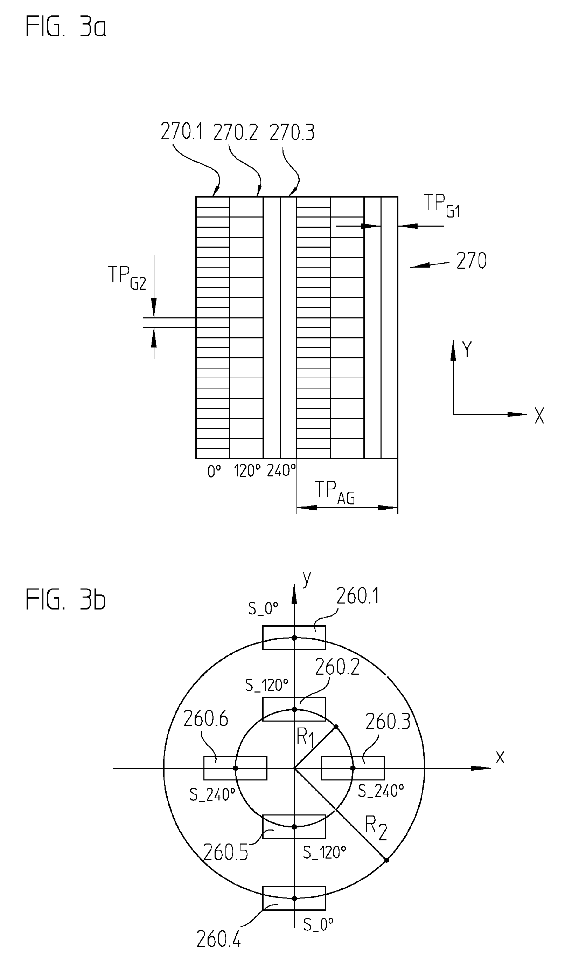

Eine dritte Ausführungsform eines Abtastgitters 270 sei nachfolgend anhand der Figuren 3a und 3b erläutert, die wiederum Teilansichten des Abtastgitters 270 sowie der Detektionsebene mit den dort platzierten Detektorelementen 260.1 - 260.6 zeigen. Auch ein derartiges Abtastgitter 270 könnte z.B. wieder in einer Positionsmesseinrichtung eingesetzt werden, wie sie anhand des Abtaststrahlengangs in den Figuren 1a und 1b erläutert wurde. Im Unterschied zu den beiden oben erläuterten Varianten ist das dritte Ausführungsbeispiel eines Abtastgitters 270 für ein Dreiphasen-System geeignet, bei dem drei phasenverschobene Inkrementalsignale S_0°, S_120° und S_240° in der erfindungsgemäßen Positionsmesseinrichtung erzeugt werden; die oben erwähnte Größe n ist nunmehr gemäß n = 3 gewählt.

Das Abtastgitter 270 umfasst in dieser Ausführung drei verschiedene Gitterabschnitte 270.1 - 270.3, die blockweise mit der Streifenmusterperiode TP_{S} in Messrichtung x angeordnet sind, wobei die Breite bₓ eines Gitterabschnitts 270.1 - 270.3 jeweils bₓ = TP_{S}/3 gewählt wird. Vorgesehen sind wiederum zwei verschiedene Gitterabschnitt-Periodizitäten TP_{G1}, TP_{G2}, mit TP_{G1}= 2 * TP_{G2}. Die Gitterabschnitte 270.2 und 270.3 weisen die größere Gitterabschnitt-Periodizität TP_{G1} auf, der Gitterabschnitt 270.1 die kleinere Gitterabschnitt-Periodizität TP_{G2}. In Bezug auf die Ausrichtung der Strukturelemente in den Gitterabschnitten 270.1 - 270.3 sind wie aus Figur 2a ersichtlich zwei verschiedene Verdrehwinkel αᵢ (i = 1...3) für die drei unterschiedlichen Gitterabschnitte 270.1 - 270.3 gewählt, nämlich die Verdrehwinkel α₁ = 90°, α₂ = 90°, α₃ = 0°.

In der Detektionsebene ergeben sich hierbei entsprechend der Darstellung der Figur 3b die Ablenkwinkel +/- β für jeden Gitterabschnitt 270.3 - 270.3 gemäß der nachfolgenden Zusammenstellung:

| Inkrementalsignal | S_0° | S_120° | S_240° |
|---|---|---|---|
| Verdrehwinkel der Strukturelemente αᵢ [°]; i = 1...3 | 90 | 90 | 0 |
| Winkel der +1. Beugungsordnung β [°] | 90 | 90 | 0 |
| Winkel der -1. Beugungsordnung β [°] | 270 | 270 | 180 |
| Radius der Detektorelement-Schwerpunkte [R] | 2 | 1 | 1 |

Wie wiederum aus der Zusammenstellung sowie aus der Figur 3b ersichtlich, werden die sechs Detektorelemente 260.1 - 260.6 mit ihren geometrischen Schwerpunkten wiederum auf zwei Kreisen mit den Radien R1 und R2, mit R2 = 2 * R1, angeordnet. Hierbei erfolgt die Anordnung der geometrischen Schwerpunkte der Detektorelemente 260.2, 260.3, 260.5 und 260.6 auf dem Kreis mit dem Radius R1, die Schwerpunkte der Detektorelemente 260.1, und 260.4 werden in der angegebenen Art und Weise auf dem Kreis mit dem Radius R2 angeordnet.

In Bezug auf die besonderen Vorteile dieser Variante bei einem Dreiphasensystem sei auf die obigen Erläuterungen bzgl. der Polarisationsproblematik bei VCSEL-Lichtquellen verwiesen.

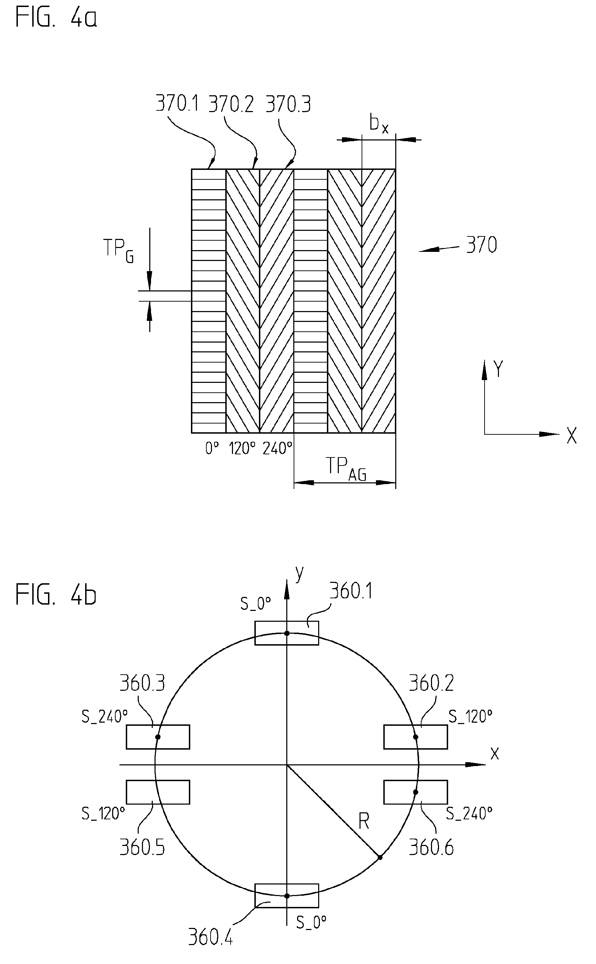

Abschließend sei anhand der Figuren 4a und 4b eine vierte Ausführungsform eines geeigneten Abtastgitters 370 verwiesen, die ebenfalls in einer Positionsmesseinrichtung gemäß dem erläuterten Beispiel der Figuren 1a und 1b eingesetzt werden könnte; diese Variante eines Abtastgitters 370 ist wiederum geeignet für ein Dreiphasensystem (n=3).

Das Abtastgitter 370 umfasst wie im vorherigen Beispiel drei verschiedene Gitterabschnitte 370.1 - 370.3, die blockweise mit der Streifenmusterperiode TP_{S} in Messrichtung x angeordnet sind, wobei die Breite bₓ eines Gitterabschnitts 370.1 - 370.3 jeweils wiederum bₓ = TP_{S}/3 gewählt wird. Vorgesehen ist im Unterschied zur vorherigen Variante, dass in allen drei unterschiedlichen Gitterabschnitten die gleiche Gitterabschnitt-Periodizität TP_{G} für die Strukturelemente gewählt wird.

In Bezug auf die Ausrichtung der Strukturelemente in den Gitterabschnitten 370.1 - 370.3 sind, wie aus Figur 4a ersichtlich, drei verschiedene Verdrehwinkel αᵢ (i = 1...3) für die drei unterschiedlichen Gitterabschnitte 370.1 - 370.3 gewählt, nämlich α₁ = 90°, α₂ = 20°, α₃ = -20°.

In der Detektionsebene ergeben sich hierbei entsprechend der Darstellung der Figur 4b die Ablenkwinkel +/- β für jeden Gitterabschnitt 370.3 - 370.3 gemäß der nachfolgenden Zusammenstellung:

| Inkrementalsignal | S_0° | S_120° | S_240° |
|---|---|---|---|
| Verdrehwinkel der Strukturelemente αᵢ [°]; i = 1...3 | 90 | 20 | -20 |
| Winkel der +1. Beugungsordnung β [°] | 90 | 20 | -20 |
| Winkel der -1. Beugungsordnung β [°] | 270 | 200 | 160 |
| Radius der Detektorelement-Schwerpunkte [R] | 1 | 1 | 1 |

Als vorteilhaft an dieser Variante eines Abtastgitters 370 für eine erfindungsgemäße Positionsmesseinrichtung ist anzuführen, dass aufgrund der resultierenden Winkel β für die Ablenkung der +1. und -1. Beugungsordnungen der für die sechs Detektorelemente 360.1 - 360.6 verfügbare Platz in der Detektionsebene optimal ausgenutzt wird. Es ergibt sich ein kompaktes System mit einem relativ geringen Bauraumvolumen für die Abtasteinheit.

Neben den erläuterten Ausführungsbeispielen gibt es im Rahmen der vorliegenden Erfindung selbstverständlich noch alternative Ausgestaltungsmöglichkeiten.

So sei darauf hingewiesen, dass der anhand der Figuren 1a und 1b erläuterte Abtaststrahlengang zur Erzeugung eines periodischen Streifenmusters in einer Abtastebene keineswegs zwingend für die vorliegende Erfindung ist. Ein derartiges Streifenmuster kann auch durch anders ausgebildete Maßverkörperungen und/oder Abtasteinheiten über die Wechselwirkung der von einer Lichtquelle emittierten Strahlenbündel mit der Maßverkörperung und optionalen weiteren Gittern im Abtaststrahlengang erzeugt werden. Grundsätzlich wäre natürlich alternativ zum erläuterten Auflicht-System auch ein Durchlicht-System mit einer Durchlicht-Maßverkörperung erfindungsgemäß realisierbar. Ebenso kann neben einer Positionsmesseinrichtung zur Erfassung von Linearbewegungen auch eine rotatorische Positionsmesseinrichtung erfindungsgemäß ausgestaltet werden usw..

Desweiteren ist es möglich, anstelle der erläuterten transmittiven Abtastgitter auch reflektive Varianten desselben einzusetzen und eine schräge Beleuchtung desselben in Strichrichtung y vorzusehen. Im Abtaststrahlengang wäre dann zudem noch eine weitere Strahlumlenkung durch entsprechende Reflektorelemente nötig etc..

## Patentansprüche

1. Optische Positionsmesseinrichtung zur Erzeugung von mehreren phasenverschobenen, verschiebungsabhängigen Inkrementalsignalen (S_0°, S_90°, S180°, S270°; S_0°, S_120°, 1_240°) bezüglich zweier in einer Messrichtung (x) zueinander beweglichen Objekte, bestehend aus
- einer Maßverkörperung (20) und
- einer Abtasteinheit (10) mit einem in einer Abtastebene angeordneten Abtastgitter (17; 170; 270; 370) sowie mehreren, dem Abtastgitter (17; 170; 270; 370) nachgeordneten Detektorelementen (16.1 - 16.8; 160.1 - 160.8; 280.1 - 260.6; 360.1 - 360.6),
wobei über die Wechselwirkung der von einer Lichtquelle (11) emittierten Strahlenbündel mit der Maßverkörperung (20) und optionalen weiteren Gittern im Abtaststrahlengang in der Abtastebene ein Streifenmuster mit der Streifenmuster-Periodizität TPₛ resultiert, **dadurch gekennzeichnet, dass**
- das Abtastgitter (17; 170; 270; 370) zur Erzeugung aller Inkrementalsignale (S_0°, S_90°, S180°, S270°; S_0°, S_120°, 1_240°) aus mehreren, periodisch mit der Abtastgitter-Periodizität TP_{AG} = TP_{S} in Messrichtung (x) angeordneten Blöcken besteht, wobei jeder Block n=3 oder n=4 ausschließlich in Messrichtung (x) angeordnete Gitterabschnitte (17.1 - 17.4; 170.1 - 170.4; 270.1 - 270.3; 370.1 - 370.3) der Breite bₓ = TP_{AG}/n umfasst und jeder Gitterabschnitt (17.1 - 17.4; 170.1 - 170.4; 270.1 - 270.3; 370.1 - 370.3) eine periodische Gitterstruktur aufweist, die eine Ablenkung der durch diesen Gitterabschnitt (17.1 - 17.4; 170.1
- 170.4; 270.1 - 270.3; 370.1 - 370.3) propagierenden Strahlenbündel in mehrere Raumrichtungen bewirkt, wobei sich die resultierenden Raumrichtungen der Gitterabschnitte (17.1 - 17.4; 170.1 - 170.4; 270.1 - 270.3; 370.1 - 370.3) in einem Block unterscheiden und
- in einer Detektionsebene Detektorelemente (16.1 - 16.8; 160.1 - 160.8; 260.1 - 260.6; 360.1 - 360.6) in den verschiedenen Raumrichtungen angeordnet sind, wobei die Detektionsebene in einem Bereich liegt, in dem die vom Abtastgitter (17; 170; 270; 370) kommenden Strahlenbündel vollständig räumlich getrennt sind.

2. Optische Positionsmesseinrichtung nach Anspruch 1, **dadurch gekennzeichnet, dass** die Gitterstrukturen aus periodisch mit der Gitterabschnitt-Periodizität TP_{G} angeordneten Strukturelementen mit alternierend unterschiedlichen optischen Eigenschaften bestehen, die jeweils innerhalb eines Gitterabschnitts (17.1 - 17.4; 170.1 - 170.4; 270.1 - 270.3; 370.1 - 370.3) unter dem gleichen Verdrehwinkel (αᵢ) zu einer Achse (y) senkrecht zur Messrichtung (x) angeordnet sind.

3. Optische Positionsmesseinrichtung nach Anspruch 2, **dadurch gekennzeichnet, dass** für n = 4 verschiedene Gitterabschnitte (17.1 - 17.4; 170.1 - 170.4) in einem Block zwei oder vier verschiedene Verdrehwinkel (αᵢ) für die Strukturelemente der Gitterabschnitte (17.1 - 17.4; 170.1 - 170.4; 270.1 - 270.3; 370.1 - 370.3) gewählt sind.

4. Optische Positionsmesseinrichtung nach Anspruch 3, **dadurch gekennzeichnet, dass**
- im Fall von zwei vorgesehenen, verschiedenen Verdrehwinkeln (αᵢ) diese gemäß α₁ = 0°, α₂ = 0°, α₃ = 90°, α₄ = 90°gewählt sind oder
- im Fall von vier vorgesehenen, verschiedenen Verdrehwinkeln (αᵢ) diese gemäß α₁ = 0°, α₂ = 30°, α₃ = 90°, α₄ = -30° gewählt sind.

5. Optische Positionsmesseinrichtung nach Anspruch 2, **dadurch gekennzeichnet, dass** für n = 3 verschiedene Gitterabschnitte (270.1 - 270.3; 370.1 - 370.3) in einem Block zwei oder drei verschiedene Verdrehwinkel (αᵢ) für die Strukturelemente der Gitterabschnitte (270.1 - 270.3; 370.1 - 370.3) gewählt sind.

6. Optische Positionsmesseinrichtung nach Anspruch 5, **dadurch gekennzeichnet, dass**
- im Fall von zwei vorgesehenen, verschiedenen Verdrehwinkeln (αᵢ) diese gemäß α₁ = 90°, α₂ = 90°, α₃ = 0° gewählt sind oder
- im Fall von drei vorgesehenen, verschiedenen Verdrehwinkeln (αᵢ) diese gemäß α₁ = 90°, α₂ = 20°, α₃ = -20° gewählt sind.

7. Optische Positionsmesseinrichtung nach mindestens einem der vorhergehenden Ansprüche, **dadurch gekennzeichnet, dass** die Gitterstrukturen als Phasengitter ausgebildet sind, bei denen unterschiedliche Strukturelemente jeweils eine unterschiedliche phasenschiebende Wirkung auf die einfallenden Strahlenbündel ausüben.

8. Optische Positionsmesseinrichtung nach mindestens einem der Ansprüche 1 - 6, **dadurch gekennzeichnet, dass** die Gitterstrukturen als Amplitudengitter ausgebildet sind, bei denen unterschiedliche Strukturelemente jeweils eine unterschiedliche Durchlässigkeit auf die darauf einfallenden Strahlenbündel besitzen.

9. Optische Positionsmesseinrichtung nach mindestens einem der vorhergehenden Ansprüche, **dadurch gekennzeichnet, dass** die Detektorelemente (16.1 - 16.8; 160.1 - 160.8; 260.1 - 260.6; 360.1 - 360.6) rechteckförmig ausgebildet sind und in Messrichtung (x) eine größere Länge besitzen als in der hierzu senkrechten Richtung (y).

10. Optische Positionsmesseinrichtung nach Anspruch 2, **dadurch gekennzeichnet, dass** die verschiedenen Gitterabschnitte (17.1 - 17.4; 370.1 - 370.3) die gleiche Gitterabschnitt-Periodizität (TP_{G}) aufweisen.

11. Optische Positionsmesseinrichtung nach Anspruch 10, **dadurch gekennzeichnet, dass** die geometrischen Schwerpunkte der Detektorelemente (16.1 - 16.8; 360.1 - 360.6) in der Detektionsebene auf einem Kreis mit dem Radius R angeordnet sind.

12. Optische Positionsmesseinrichtung nach Anspruch 2, **dadurch gekennzeichnet, dass** die verschiedenen Gitterabschnitte (170.1 - 170.4; 270.1 - 270.3) zwei unterschiedliche Gitterabschnitt-Periodizitäten (TP_{G,j}) aufweisen.

13. Optische Positionsmesseinrichtung nach Anspruch 12, **dadurch gekennzeichnet, dass** die geometrischen Schwerpunkte der Detektorelemente (160.1 - 160.8; 260.1 - 260.6) in der Detektionsebene auf zwei Kreisen mit unterschiedlichen Radien (R1, R2) angeordnet sind.

14. Optische Positionsmesseinrichtung nach mindestens einem der vorhergehenden Ansprüche, **dadurch gekennzeichnet, dass** die Abtasteinheit (10) dergestalt ausgebildet ist, dass die von einer Lichtquelle (11) emittierten Strahlenbündel
- ein erstes Mal auf die Maßverkörperung (20) auftreffen, wo eine Aufspaltung in zwei zur Abtasteinheit (10) rückreflektierte Teilstrahlenbündel erfolgt, die zwei unterschiedlichen Beugungsordnungen entsprechen,
- die beiden rückreflektierten Teilstrahlenbündel in der Abtasteinheit (10) über ein Retroreflektorelement eine Rückreflexion in Richtung Maßverkörperung (20) erfahren, wobei die Teilstrahlenbündel je zweimal Gitter (14.1, 14.2, 14.3, 14.4) durchlaufen,
- die auf die Maßverkörperung (20) ein zweites Mal auftreffenden Teilstrahlenbündel eine erneute Beugung und Rückreflexion in Richtung der Abtasteinheit (10) erfahren,
- in der Abtasteinheit (10) mindestens ein Paar rückreflektierter Teilstrahlenbündel unter symmetrischen Winkeln (α1, α2) zur optischen Achse (OA) am gleichen Ort auf das Abtastgitter (17) auftrifft.

15. Optische Positionsmesseinrichtung nach mindestens einem der vorhergehenden Ansprüche, **dadurch gekennzeichnet, dass** zwischen dem Abtastgitter (17) und den nachgeordneten Detektorelementen (16.1 - 16.8) eine Fokussieroptik (18) angeordnet ist, über die eine Fokussierung der in die verschiedenen Raumrichtungen abgelenkten Teilstrahlenbündel auf die Detektorelemente (16.1 - 16.8) erfolgt.

## Claims

1. Optical position measuring device for generating a plurality of phase-shifted, shift-dependent incremental signals (S_0°, S_90°, S180°, S270°; S_0°, S_120°, 1_240°) with reference to two objects movable relative to one another in a measuring direction (x), comprising
- a material measure (20), and
- a scanning unit (10) having a scanning grid (17; 170; 270; 370) arranged in a scanning plane and a plurality of detector elements (16.1 - 16.8; 160.1 - 160.8; 260.1 - 260.6; 360.1 - 360.6) downstream of the scanning grid (17; 170; 270; 370),
a stripe pattern with the stripe pattern periodicity TPₛ resulting via the interaction of the beam emitted by a light source (11) with the material measure (20) and optional further grids in the scanning beam path in the scanning plane,
**characterized in that**
- in order to generate all the incremental signals (S_0°, S_90°, S180°, S270°, S_0°, S_120°, 1_240°) the scanning grid (17; 170; 270; 370) consists of a plurality of blocks arranged periodically with the scanning grid periodicity TP_{AG} = TPₛ in the measuring direction (x), each block n = 3 or n = 4 comprising grid sections (17.1 - 17.4; 170.1 - 170.4; 270.1 - 270.3; 370.1 - 370.3) arranged exclusively in the measuring direction (x), of width bₓ = TP_{AG}/n, and each grid section (17.1 - 17.4; 170.1 - 170.4; 270.1 270.3; 370.1 - 370.3) having a periodic grid structure which causes the beam propagating through said grid section (17.1 - 17.4; 170.1 - 170.4; 270.1 - 270.3; 370.1 - 370.3) to be deflected in a plurality of spatial directions, the resulting spatial directions of the grid sections (17.1 - 17.4; 170.1 - 170.4; 270.1 - 270.3; 370.1 - 370.3) differing in a block, and
- detector elements (16.1 - 16.8; 160.1 - 160.8; 260.1 - 260.6; 360.1 - 360.6) being arranged in the various spatial directions in a detection plane, the detection plane lying in a region in which the beams coming from the scanning grid (17; 170; 270; 370) are completely spatially separated.

2. Optical position measuring device according to Claim 1, **characterized in that** the grid structures consist of structural elements which are arranged periodically with the grid section periodicity TP_{G}, alternately have different optical characteristics and are respectively arranged inside a grid section (17.1 - 17.4; 170.1 - 170.4; 270.1 - 270.3; 370.1 - 370.3) at the same angle of rotation (αᵢ) to an axis (y) perpendicular to the measuring direction (x).

3. Optical position measuring device according to Claim 2, **characterized in that** for n = 4 different grid sections (17.1 - 17.4; 170.1 - 170.4) in a block two or four different angles of rotation (αᵢ) are selected for the structural elements of the grid sections (17.1 - 17.4; 170.1 - 170.4; 270.1 - 270.3; 370.1 - 370.3).

4. Optical position measuring device according to Claim 3, **characterized in that**
- in the case of the provision of two different angles of rotation (αᵢ), the latter are selected in accordance with α₁ = 0°, α₂ = 0°, α₃ = 90°, α₄ = 90°, or
- in the case of the provision of four different angles of rotation (α_{I}), the latter are selected in accordance with α₁ = 0°, α₂ = 30°, α₃ = 90°, α₄ = -30°.

5. Optical position measuring device according to Claim 2, **characterized in that** for n = 3 different grid sections (270.1 - 270.3; 370.1 - 370.3) in a block, two or three different angles of rotation (αᵢ) are selected for the structural elements of the grid sections (270.1 - 270.3; 370.1 - 370.3).

6. Optical position measuring device according to Claim 5, **characterized in that**
- in the case of the provision of two different angles of rotation (α₁), the latter are selected in accordance with α₁ = 90°, α₂ = 90°, α₃ = 0°, or
- in the case of the provision of three different angles of rotation (α₁), the latter are selected in accordance with α₁ = 90°, α₂ = 20°, α₃ = -20°.

7. Optical position measuring device according to at least one of the preceding claims, **characterized in that** the grid structures are designed as phase grids in the case of which different structural elements respectively exert a different phase-shifting effect on the incident beam.

8. Optical measuring device according to at least one of the preceding claims, **characterized in that** the grid structures are designed as amplitude grids in the case of which different structural elements respectively have a different transmissivity to the beam incident thereon.

9. Optical position measuring device according to at least one of the preceding claims, **characterized in that** the detector elements (16.1 - 16.8; 160.1 - 160.8; 260.1 - 260.6; 360.1 - 360.6) are of rectangular design and have a greater length in the measuring direction (x) than in the direction (y) perpendicular thereto.

10. Optical position measuring device according to Claim 2, **characterized in that** the various grid sections (17.1 - 17.4; 370.1 - 370.3) have the same grid section periodicity (TP_{G}).

11. Optical position measuring device according to Claim 10, **characterized in that** the geometrical centroids of the detector elements (16.1 - 16.8; 360.1 - 360.6) are arranged in the detection plane on a circle of radius R.

12. Optical position measuring device according to Claim 2, **characterized in that** the various grid sections (170.1 - 170.4; 270.1 - 270.3) have two different grid section periodicities (TP_{g,j}).

13. Optical position measuring device according to Claim 12, **characterized in that** the geometrical centroids of the detector elements (160.1 - 160.8; 260.1 - 260.6) are arranged in the detection plane on two circles of different radii (R1, R2).

14. Optical position measuring device according to at least one of the preceding claims, **characterized in that** the scanning unit (10) is designed in such a way that the beams emitted by a light source (11)
- strike for a first time on the material measure (20), where splitting into two component beams occurs, said component beams being retroreflected to the scanning unit (10) and corresponding to two different diffraction orders,
- the two retroreflected component beams in the scanning unit (10) undergo retroreflection in the direction of the material measure (20) via a retroreflector element, the component beams respectively traversing grids (14.1, 14.2, 14.3, 14.4) twice,
- the component beams striking the material measure (20) a second time undergo renewed diffraction and retroreflection in the direction of the scanning unit (10), and
- in the scanning unit (10) at least one pair of retroreflected component beams strikes the scanning grid (17) at the same location and at symmetrical angles (α₁, α₂) with respect to the optical axis (OA).

15. Optical position measuring device according to at least one of the preceding claims, **characterized in that** arranged between the scanning grid (17) and the downstream detector elements (16.1 - 16.8) is a focusing optics (18) via which the component beams deflected in the various spatial directions are focused onto the detector elements (16.1 - 16.8).

## Revendications

1. Dispositif de mesure de position optique destiné à générer une pluralité de signaux incrémentiels (S_0°, S_90°, S180°, S270° ; S_0°, S_120°, 1_240°) dépendant du déplacement et déphasés par rapport à deux objets mobiles l'un par rapport à l'autre dans une direction de mesure (x), comprenant :
- un corps d'étalonnage (20) et
- une unité de balayage (10) comportant un réseau de balayage (17 ; 170 ; 270 ; 370) disposé dans un plan de balayage ainsi qu'une pluralité d'éléments détecteurs (16.1 - 16.8 ; 160.1 - 160.8 ; 260.1 - 260.6 ; 360.1 - 360.6), situés en aval du réseau de balayage (17 ; 170 ; 270 ; 370),
dans lequel il résulte de l'interaction du faisceau de rayonnement émis par une source de lumière (11) avec le corps d'étalonnage (20) et d'autres réseaux facultatifs sur le chemin du faisceau de balayage dans le plan de balayage, un motif de bandes ayant une périodicité de motif de bande TP_{S},
**caractérisé en ce que**
- le réseau de balayage (17 ; 170 ; 270 ; 370) destiné à générer tous les signaux incrémentiels (S_0°, S_90°, S180°, S270° ; S_0°, S_120°, 1_240°) est constitué d'une pluralité de blocs disposés périodiquement selon la périodicité de réseau de balayage TP_{AG} = TP_{S} dans la direction de mesure (x), dans lequel chaque bloc n = 3 ou n = 4 comprend des sections de réseau (17.1 - 17.4 ; 170.1 - 170.4 ; 270.1 - 270.3 ; 370.1 - 370.3) agencées dans la direction de mesure (x) de largeur bₓ = TP_{AG}/n et **en ce que** chaque section de réseau (17.1 - 17.4 ; 170.1 - 170.4 ; 270.1 - 270.3 ; 370.1 - 370.3) présente une structure de réseau périodique qui produit une déviation dans plusieurs directions spatiales des faisceaux de rayonnement se propageant à travers ladite section de réseau (17.1 - 17.4 ; 170.1 - 170.4 ; 270.1
- 270.3 ; 370.1 - 370.3), dans lequel les directions spatiales résultantes des sections de réseaux (17.1 - 17.4 ; 170.1 - 170.4 ; 270.1 - 270.3 ; 370.1 - 370.3) se différencient dans un bloc et
- des éléments détecteurs (16.1 - 15.8 ; 160.1 - 160.8 ; 260.1 - 260.6 ; 360.1 - 360.6) sont agencés dans les différentes directions spatiales dans un plan de détection, dans lequel le plan de détection se situe dans une zone dans laquelle les faisceaux de rayonnement provenant du réseau de balayage (17 ; 170 ; 270 ; 370) sont entièrement séparés spatialement.

2. Dispositif de mesure de position optique selon la revendication 1, **caractérisé en ce que** les structures de réseaux sont constituées d'éléments structurels ayant des propriétés optiques présentant des différences périodiques agencés périodiquement avec une périodicité de section de réseau TP_{G}, qui sont respectivement disposés à l'intérieur d'une section de réseau (17.1 - 17.4 ; 170.1 - 170.4 ; 270.1 - 270.3 ; 370.1 - 370.3) sous un même angle de torsion (αᵢ) par rapport à un axe (y) perpendiculaire à la direction de mesure (x).

3. Dispositif de mesure de position optique selon la revendication 2, **caractérisé en ce que** pour n=4 sections de réseaux différentes (17.1 - 17.4 ; 170.1 - 170.4) dans un bloc, deux ou quatre angles de torsion différents (αᵢ) sont sélectionnés pour les éléments structurels des sections de réseaux (17.1 - 17.4 ; 170.1 - 170.4 ; 270.1 - 270.3 ; 370.1 - 370.3).

4. Dispositif de mesure de position optique selon la revendication 3, **caractérisé en ce que**
dans le cas de deux angles de torsion différents prévus (αᵢ), ceux-ci sont sélectionnés de manière à ce que α₁ = 0°, α₂ = 0°, α₃ = 90°, α₄ = 90°, ou
dans le cas de quatre angles de torsion différents prévus (αᵢ), ceux-ci sont sélectionnés de manière à ce que α₁ = 0°, α₂ = 30°, α₃ = 90°, α₄ = -30°.

5. Dispositif de mesure de position optique selon la revendication 2, **caractérisé en ce que** pour n = 3 sections de réseaux différentes (270.1 - 270.3 ; 370.1 - 370.3) dans un bloc, deux ou trois angles de torsion différents (αᵢ) sont sélectionnés pour les éléments structurels des sections de réseaux (270.1 - 270.3 ; 370.1 - 370.3).

6. Dispositif de mesure de position optique selon la revendication 5, **caractérisé en ce que**
- dans le cas de deux angles de torsion différents prévus (αᵢ), ceux-ci sont sélectionnés de manière à ce que α₁ = 90°, α₂ = 90°, α₃ = 0°, ou
- dans le cas de trois angles de torsion différents prévus (αᵢ), ceux-ci sont sélectionnés de manière à ce que α₁ = 90°, α₂ = 20°, α₃ = -20°.

7. Dispositif de mesure de position optique selon au moins l'une des revendications précédentes, **caractérisé en ce que** les structures de réseaux sont réalisées sous la forme de réseaux de phase dans lesquels des éléments structurels différents exercent respectivement un effet de déphasage différent sur les faisceaux de rayonnement incidents.

8. Dispositif de mesure de position optique selon au moins l'une des revendications 1-6, **caractérisé en ce que** les structures de réseaux sont réalisées sous la forme de réseaux d'amplitude dans lesquels des éléments structurels différents possèdent respectivement une transparence différente vis-à-vis des faisceaux de rayonnement incidents sur ceux-ci.

9. Dispositif de mesure de position optique selon au moins l'une des revendications précédentes, **caractérisé en ce que** les éléments détecteurs (16.1 - 16.8 ; 160.1 - 160.8 ; 260.1 - 260.6 ; 360.1 - 360.6) sont réalisés sous forme rectangulaire et possèdent une plus grande longueur dans la direction de mesure (x) que dans une direction (y) perpendiculaire à celle-ci.

10. Dispositif de mesure de position optique selon au moins la revendication 2, **caractérisé en ce que** les différentes sections de réseaux (17.1 - 17.4 ; 370.1 - 370.3) présentent la même périodicité de section de réseau (TP_{G}).

11. Dispositif de mesure de position optique selon la revendication 10, **caractérisé en ce que** les barycentres géométriques des éléments détecteurs (16.1 - 16.8 ; 360.1 - 360.6) sont agencés dans le plan de détection sur un cercle de rayon R.

12. Dispositif de mesure de position optique selon la revendication 2, **caractérisé en ce que** les différentes sections de réseaux (170.1 - 170,4 ; 270.1 - 270.3) présentent deux périodicités de section de réseau différentes (TP_{G,j}).

13. Dispositif de mesure de position optique selon la revendication 12, **caractérisé en ce que** les barycentres géométriques des éléments détecteurs (160.1 - 160.8 ; 260.1 - 260.6) sont agencés dans le plan de détection sur deux cercles de rayons différents (R1, R2).

14. Dispositif de mesure de position optique selon au moins l'une des revendications précédentes, **caractérisé en ce que** l'unité de balayage (10) est conçue de manière à ce que les faisceaux de rayonnement émis par une source de lumière (11)
- soient incidents une première fois sur le corps d'étalonnage (20), où il se produit une division en deux faisceaux de rayonnement partiels rétro-réfléchis vers l'unité de balayage (10), ceux-ci correspondant à deux ordres de diffraction différents,
- les deux faisceaux de rayonnement partiels rétro-réfléchis sont soumis à une rétro-réflexion dans la direction du corps d'étalonnage (20) dans l'unité de balayage (10) par l'intermédiaire d'un élément rétro-réfléchissant, dans lequel les faisceaux de rayonnement partiels traversent respectivement deux fois les réseaux (14.1, 14.2, 14.3, 14.4),
- les faisceaux de rayonnement partiels incidents une deuxième fois sur le corps d'étalonnage (20) sont de nouveau soumis à une diffraction et à une rétro-réflexion dans la direction de l'unité de balayage (10),
- au moins une paire de faisceaux de rayonnement partiels rétro-réfléchis dans l'unité de balayage (10) est incidente en un même point sur le réseau balayage (17) sous des angles symétriques (α₁, α₂) par rapport à l'axe optique (OA).

15. Dispositif de mesure de position optique selon au moins l'une des revendications précédentes, **caractérisé en ce que**, entre le réseau de balayage (17) et les éléments détecteurs disposés en aval (16.1 - 16.8), se trouve une optique de focalisation (18) par l'intermédiaire de laquelle une focalisation des faisceaux de rayonnement partiels déviés dans les différentes directions spatiales est effectuée sur les éléments détecteurs (16.1 - 16.8).
